# EUROPEAN PATENT APPLICATION

(11) **EP 4 475 395 A1**
(43) Date of publication of application: **11.12.2024**
(21) Application number: 23382551.2
(22) Date of filing: 07.06.2023
(51) Int. Cl.: H02K 1/278, H02K 1/32, H02K 9/04, H02K 9/08, H02K 7/18, H02K 1/20

(54) **ELECTRIC GENERATOR FOR A WIND TURBINE, INNER ROTOR FOR AN ELECTRIC GENERATOR FOR A WIND TURBINE AND WIND TURBINE WITH AN ELECTRIC GENERATOR**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Electric generator for a wind turbine (1), comprising an outer stator (11) and an inner rotor (10) with a plurality of permanent magnets (18), wherein the rotor (10) is rotatably mounted about a rotation axis (6), wherein the rotor (10) is realized by a modular assembly of several modules (17) each comprising at least one of the permanent magnets (18), wherein at least one of the modules (17) delimits at least one air cooling channel (24) of the rotor (10).

## Description

The present invention is related to an electric generator for a wind turbine, comprising an outer stator and an inner rotor with a plurality of permanent magnets, wherein the rotor is rotatably mounted around a rotation axis. Furthermore, the invention relates to an inner rotor for an electric generator for a wind turbine, comprising a plurality of permanent magnets. Additionally, the present invention relates to a wind turbine.

A wind turbine typically comprises a hub with several blades, wherein the hub is mounted such that it can rotate around a rotation axis. The wind-driven rotation of the hub is transferred to the rotor of the electric generator. The electric generator is typically arranged within a nacelle, wherein the nacelle is arranged on top of a tower of the wind turbine. Modern wind turbines can have a total height of tens or hundreds of meters. The output power of the electric generator can be in the range of multi-megawatts, particularly between 1 and 40 megawatts. Electric currents which occur in the rotor and the stator cause the need of a cooling of the respective components. For this purpose, air, particularly ambient air from the vicinity of the wind turbine or air circulating within a cooling circuit, can be guided to the electric generator, wherein the air gets in thermal contact with the stator and/or rotor and transports heat away from these components.

From the state of the art, a cooling concept is known where an air gap, which is arranged between the stator and the rotor, is increased regarding its width. Hence, the amount of air which can be guided through the air gap is increased to realize an enhanced cooling effect. However, the increase of the width of the air gap causes the need of an increase of the active parts of the generator, i.e., larger permanent magnets and/or stator windings, which causes a higher mass of the respective components and higher costs.

It is an object of the present invention to provide and enhanced concept regarding the cooling of the components of the electric generator of the wind turbine.

According to the present invention, to achieve this object, an electric generator as described initially is characterized in that the rotor is realized by a modular assembly of several modules each comprising at least one of the permanent magnets, wherein at least one of the modules delimits at least one air cooling channel of the rotor.

An idea of the invention is to provide a rotor which is split into unitary pieces, wherein each of the pieces being one of the modules is or comprises one or several of the permanent magnets. At least one air cooling channel is delimited by at least one of the modules. Hence, the air cooling channel can be realized by a gap between the respective module and further components of the generator or between several modules. The air is guided within the cooling channels such that the air gets in direct contact with the respective modules to absorb heat from these modules. This direct contact increases the heat flow from the modules to the air. Hence, according to the present invention, the problem which is discussed with respect to the state of the art above is overcome, particularly since the width of the air gap does not need to be increased to increase the cooling effect.

The modules are single elements or components of the rotor which are attached with each other and/or with other components of the rotor. Hence, regarding the concept of the present invention, the rotor is not realized by a single piece but by several modules being arranged particularly adjacently to each other.

Regarding the definitions of directions, the direction pointing perpendicular away from the rotation axis can be defined as a radial direction. The direction pointing perpendicular away from the radial direction into the direction a point of the rotor which rotates around the rotation axis can be defined as a circumferential direction. The rotation axis of the rotor can extend along a shaft or hub of the electric generator being connected with a main shaft of the wind turbine.

At least one wall of the air cooling channel is realized by a, particularly outer, surface of one of the modules. Regarding a possible embodiment of the present invention, the air cooling channel extends between two adjacent modules. In this embodiment, to lateral walls of the air cooling channel is realized by outer surfaces of these two modules.

The electric generator is adapted to be used in a speed range of the rotor of up to 3600 rotations per minute (rpm). Preferably, the electric generator comprises a rotor speed range between 400 and 800 rpm.

Preferably, an air gap is provided between the stator and the rotor, wherein the air cooling channel is open radially outwards to the air gap. The air gap can have a width in the order of millimeters. The air cooling channel communicates with the air gap such that also the stator is cooled by the respective air.

The modules can be arranged on a shaft, particularly being made of steel. The air cooling channel can be delimited radially inwards by the shaft. The shaft can be connected with the main shaft of the wind turbine which connects the electric generator with the hub such that the rotation of the hub can be transferred to the rotor. The material of the shaft preferably allows magnetic flux to pass through it. In this embodiment, a problem regarding a further concept of the state of the art for cooling the rotor is overcome. Regarding the further concept, additional and groove like structures are added to the rotor, particularly to steel sheets of the rotor, wherein cooling air is guided through these structures. However, this solution has limited options since the physical integrity has to be ensured, particularly regarding the magnetic flux in the rotor yoke. Since in this embodiment of the present invention a sufficient cooling is realized even without the additional groove like structures in the rotor, this problem is solved.

The modules can be attached to the shaft by bolts which can be introduced in an inner surface of the shaft. The modules can comprise lateral flanges which extend along the circumferential direction, wherein the bolts can run through the lateral flanges to connect the respective modules with the shaft.

To improve the cooling effect, the shaft can have hollow cross section, wherein the shaft comprises at least one air duct connecting an interior of the shaft with the air cooling channel. In this embodiment, air can be successively guided from the interior to the shaft to the air cooling channel or vice versa via the air duct(s) such that the amount of air causing the cooling effect is increased. The air duct can extend radially from the interior of the shaft to the air cooling channel. The air duct and the interior of the shaft are preferably connected directly. The air duct can be a drilled hole.

In a preferred embodiment, the air cooling channel extends along the rotation axis. In this embodiment, the air cooling channel has a longitudinal direction, wherein the cooling air which is guided within the air cooling channel streams along the longitudinal direction. This longitudinal direction is parallel to the rotation axis. Particularly, the air cooling channel extends along the rotation axis over its complete extent. The air cooling channel can have a straight extension.

Particularly, each of the modules comprise an elongated structure, wherein the longitudinal direction of each of the modules can be arranged along the rotation axis, wherein the modules are arranged adjacently to each other and along a circumferential direction of the electric generator or the shaft, respectively. Preferably, the modules and, hence, the cooling channels extend over the complete length of the rotor. The term "arranged along the rotation axis" means that the respective longitudinal direction and the rotation axis are parallel to each other.

The electric generator according to the present invention can be characterized in that, regarding the longitudinal direction, each module comprises a U-shaped cross section having two vertical legs and a horizontal bar, wherein the or a further air cooling channel is delimited laterally by the vertical legs and radially outwards by the horizontal bar. The opening of the U-shape of the module can point radially inwards. Hence, the or the further air cooling channel which is delimited by the vertical legs and the horizontal bar can be delimited radially inwards by the shaft. Preferably, the air cooling channels are located between two adjacent modules and the further air cooling channels are each delimited laterally by the vertical legs and radially outwards by the horizontal bar. In this embodiment, the longitudinal directions of the air cooling channels and of the further air cooling channels are parallel to each other and parallel to the rotation axis.

Alternatively, regarding the longitudinal direction, each module can comprise a magnet cover with a U-shaped cross section having two vertical legs and a horizontal bar, wherein the or a further air cooling channel is delimited laterally by the vertical legs and radially outwards by the horizontal bar, wherein the permanent magnet is held in position by the magnet cover. This embodiment allows to directly arrange the permanent magnet within the or the further air cooling channel.

In a possible embodiment of the present invention, the each of the modules comprises laminated metal sheets having a recess, wherein the respective permanent magnet is arranged in the recess. In this embodiment, the laminated metal sheets realized a slot, wherein the permanent magnet is arranged in the slot. To attach the permanent magnet within the slot, the slot can be filled with resin.

Preferably, the air cooling channel, particularly extending along the complete longitudinal extension of the rotor, is open on at least one of the lateral ends of the rotor. In this embodiment, air can be guided into or out from the respective air cooling channel via the opening. An air feeding chamber can be provided longitudinally on a face end of the rotor, wherein the air feeding chamber communicates with the air cooling channel, wherein an air discharging chamber can be provided longitudinally on the face end of the rotor, particularly on the face end of the rotor being arranged oppositely with respect to the air feeding chamber, wherein the air cooling channel communicates with the air discharging chamber.

Alternatively, an air feeding chamber can be provided longitudinally on at least one of the face ends of the rotor, wherein the air feeding chambers can communicate with the air cooling channel, wherein at least one radial air duct of the stator can be provided which can radially lead through the stator and which can communicate with the air cooling channel on its one end and with a vicinity of the electric generator on its other end. In this embodiment, a symmetrical or an asymmetrical cooling arrangement can be realized. Since the stator comprises preferably several radial air ducts, the cooling effect in improved for the rotor as well as for the rotor.

The present invention is furthermore related to an inner rotor as described initially, wherein, according to the present invention, the rotor is characterized in that it comprises a modular assembly of several modules each comprising at least one of the permanent magnets, wherein at least one of the modules delimits at least one air cooling channel. All aspects, advantages and features which have been explained with respect to the electric generator according to the present invention can be transferred to the rotor according to the present invention and vice versa.

Additionally, the present invention is related to a wind turbine, wherein, according to the present invention, the wind turbine comprises an electric generator according to the description above. All aspects, advantages and features which have been explained with respect to the electric generator according to the present invention and with respect to the rotor according to the present invention can be transferred to the wind turbine according to the present invention and vice versa.

The wind turbine according to the present invention can comprise an air cooling system being a cooling circuit or an open system and comprising at least one air pump, wherein the air pump is adapted to pump cooling air to the air cooling channel. The air pump can be a ventilator. If the air cooling system is a cooling circuit, the cooling circuit can realize a thermodynamic cooling cycle. If the air cooling system is an open system, ambient air can be sucked from the vicinity of the wind turbine, particularly by an inlet opening of the wind turbine or the nacelle, respectively. After the air has passed the rotor, it can be expelled into the vicinity again, particularly by an outlet opening of the wind turbine or the nacelle, respectively. Preferably, the air pump can be adapted to pump cooling air into the feeding chamber, particularly such that the cooling air is then guided into the air cooling channel and into the air discharging chamber successively.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a view of a wind turbine according to an embodiment of the present invention, comprising an electric generator according to an embodiment of the present invention, wherein the electric generator comprises a rotor according to an embodiment of the present invention,
- Fig. 2: a view of a sector of a radial cut through the electric generator of the wind turbine of fig. 1, wherein the cutting line is indicated by II - II in fig. 1,
- Fig. 3: a view of a longitudinal cut through the electric generator of the wind turbine of fig. 1, wherein the cutting line is indicated by III - III in fig. 2,
- Fig. 4: the same view as shown in fig. 3 regarding a first variation of the electric generator,
- Fig. 5: the same view as shown in fig. 3 regarding a second variation of the electric generator, and
- Fig. 6: the same view as shown in fig. 2 on an electric generator according to a possible variation of the invention.

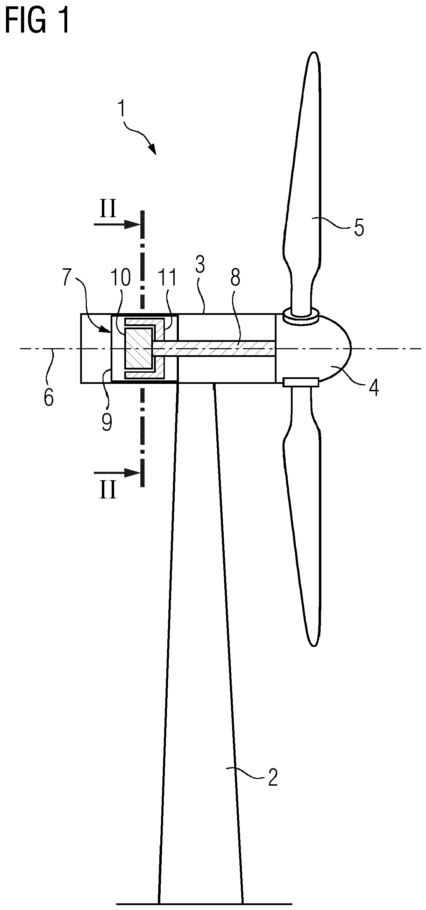

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate about a rotation axis 6. The wind-driven rotation of the hub 4 is transferred to an electric generator 7 according to an embodiment of the present invention which is located in the nacelle 3. The rotation of the hub 4 is transferred to the electric generator 7 by a main shaft 8 which extends along the rotation axis 6. The rotation axis 6 defines a longitudinal direction of the wind turbine 1 and the generator 7. The rotation axis 6 is arranged horizontally but can be also tilted with respect to the horizontal direction. While the total height of the wind turbine 1 is in the order of tens or hundreds of meters, the output power of the wind turbine 1 which is generated by the generator 7 can be in the range of multi-megawatts, particularly between 1 and 40 megawatts.

The electric generator 7 comprises an inner rotor 10 being a component according to an embodiment of the present invention and an outer stator 11. The rotor 10 and the stator 11 are arranged within a housing 9 of the generator 7. While the stator 11 is non-rotatably mounted, a shaft 12 (not shown in fig. 1) of the rotor 10 is connected with the main shaft 8 such that the rotation of the hub 4 is transferred to the rotor 10. Hence, the rotor 10 can rotate about the rotation axis 6. The electric generator 7 is adapted to be used in a speed range of the rotor 10 between 400 and 800 rotations per minute.

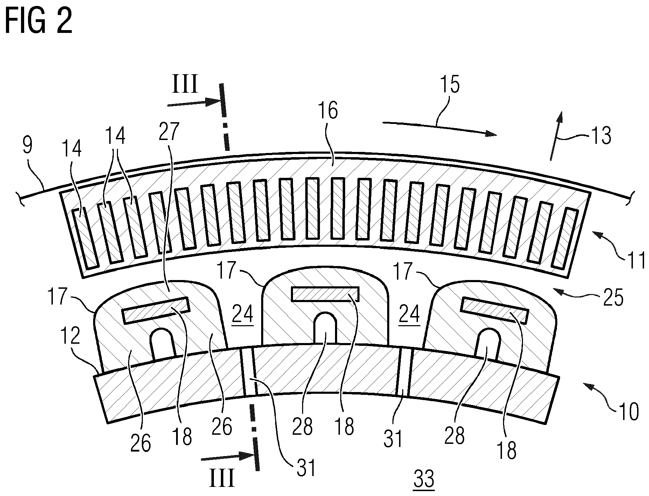

Fig. 2 shows a cross-section through a segment of the electric generator 7, wherein the sectional plane is perpendicular to the rotation axis 6. The respective cutting line is indicated by II - II in fig. 1. The stator 11 is attached to the housing 9 and comprises an iron core 16 with several laminated stator plates which are arranged perpendicular to the rotation axis 6. The iron core 16 comprises a plurality of teeth and slots between these teeth, which extend into a radial direction 13, wherein stator windings 14 are arranged within the slots. The radial direction 13 points perpendicularly outwards from the rotation axis 6. The teeth of the stator 11 are evenly spaced along a circumferential direction 15 which is defined as the direction pointing perpendicular away from the radial direction 13 and from the rotation axis 6.

The rotor 10 comprises the shaft 12 being made of steel and a plurality of modules 17 which are arranged on the shaft 12. The modules 17 are attached to the shaft 12 by bolts which are not shown in the figures. Each of the modules 17 comprises a permanent magnet 18 which electromagnetically interacts with the stator windings 14. Each of the modules 17 comprises an elongated structure, wherein the respective longitudinal direction is parallel to the rotation axis 6. The modules 17 are arranged adjacently to each other along the circumferential direction 15. Each of the modules 17 comprises laminated metal sheets which are arranged perpendicular to the rotation axis 6. The metal sheets comprise a recess which form a slot of the respective modules 17, wherein the respective permanent magnet 18 is arranged within the recess. A resin is filled into the recess to attach the permanent magnet 18 at its respective position.

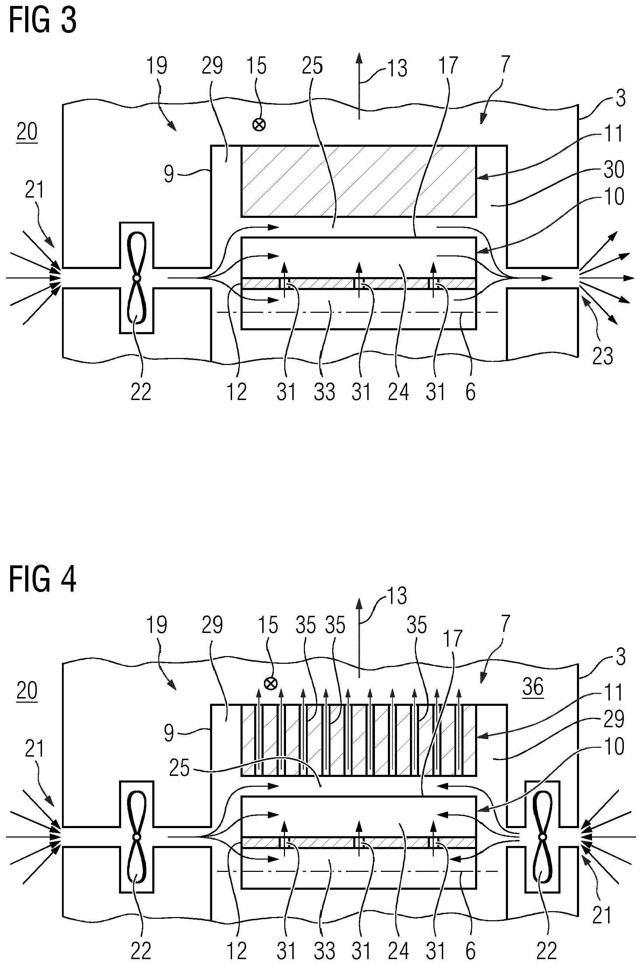

Next, it is referred to fig. 3 which shows a longitudinal cut through the electric machine 7, wherein the respective cutting line is indicated by III - III in fig. 2. Each of the modules 17 extends over the complete longitudinal extension of the rotor 10. The wind turbine 1 comprises an air cooling system 19 which is indicated in fig. 3. A flowing path of the air is indicated by arrows in this figure. The air cooling system 19 is an open system, wherein air from the vicinity 20 of the wind turbine 1 is sucked through an inlet opening 21 of the nacelle 3 by an air pump 22 being a ventilator. The respective air is guided to the electric generator 7 to cool the rotor 10 and the stator 11, wherein details regarding the air path there will be described below. Finally, the air is guided to an outlet opening 23 of the nacelle 3 and expelled into the vicinity 20. Instead of the open system, the air cooling system 19 can be a cooling circuit, particularly realizing a thermodynamic cooling cycle.

Next, details regarding the flow path of the cooling air in the region of the rotor 10 and the stator 11 will be described. As it becomes apparent particularly from fig. 2, the modules 17 delimit several air cooling channels 24 of the rotor 10. Concretely, each of the air cooling channels 24 extends between 2 adjacent modules 17, such that the air cooling channels 24 extend along the rotation axis 6, namely over the complete extent of the rotor 10. Hence, the cooling channels 24 comprise a rectangular cross-section, wherein lateral walls of the respective cross-section are realized by the outer surfaces of the modules 17. Radially inwards, the cooling channels 24 are delimited by the outer surface of the shaft 12. Radially outwards, the cooling channels 24 are open to an air gap 25 which has a width of several millimeters and which is arranged between the rotor 10 and the stator 11.

Regarding the longitudinal direction, each of the modules 7 comprises a U-shaped cross-section with two vertical legs 26 and a horizontal bar 27. The open side of the U-shape is directed radially inwards. Hence, further air cooling channels 28 are provided which are delimited laterally by the vertical legs 26, radially outwards by the horizontal bar 27 and radially inwards by the shaft 12. Like the air cooling channels 24, the further air cooling channels 28 comprise a longitudinal and straight shape, wherein the respective longitudinal extension of each of the further air cooling channels 28 extends over the complete extent of the rotor 10.

Next, referring particularly to figures 2 and 3, details regarding the path of the cooling air will be described. After the air has been sucked from the vicinity 20 via the inlet opening 21, it is guided to an air feeding chamber 29 which is located on a lateral end of the rotor 10 and within the housing 9. The air cooling channels 24 and the further air cooling channels 28 are open at the respective lateral end such that the cooling air is guided from the air feeding chamber 29 into the air cooling channels 24, 28. Additionally, the cooling air is guided into the air gap 25. After the cooling air has passed the air cooling channels 24, 28 and the air gap 25, the air is guided into an air discharging chamber 30 which is located also within the housing 9 and on the lateral end of the rotor 10 which is arranged oppositely with respect to the air feeding chamber 29. After passing the air discharging chamber 30, the cooling air is expelled into the vicinity 20 via the outlet opening 23.

Next, also referring to figures 2 and 3, another aspect regarding the shaft 12 will be described. The shaft 12 comprises a hollow cross section such that cooling air flows from the air feeding chamber 29 into an interior 33 of the shaft 12 and, after the cooling air has been passed the shaft 12, from the shaft 12 into the air discharging chamber 30. The shaft 12 comprises radial air ducts 31 being drilled holes which connect the interior 33 of the shaft 12 with the air cooling channels 24 and/or the further air cooling channels 28. Regarding the lateral end of the shaft 12 being arranged on the air discharging chamber 30, the interior 33 of the shaft 12 can be closed such that the complete amount of cooling air which enters the interior 33 of the shaft 12 flows through the radial air ducts 31 to increase the cooling effect of the rotor 10.

Fig. 4 shows another option regarding the path of the cooling air. All aspects which have been described with the help of fig. 3 hold true for the embodiment shown in fig. 4, apart from the following aspects. The embodiment of fig. 4 realizes a symmetrical cooling arrangement, wherein two inlet openings 21 are provided. Air is sucked from the vicinity 20 via both inlet openings 21 by two air pumps 22 and subsequently enters two air feeding chambers 29 which are arranged longitudinally on the face ends of the rotor 10. The air cooling channels 24 and the further air cooling channels 28 are open at their lateral ends such that cooling air is guided from each of the air feeding chamber 29 into the air cooling channels 24, 28 from both sides. The cooling air is guided to the axial center of the rotor and subsequently to several radial air ducts 35 of the stator 11. The radial air ducts 35 radially lead through the stator 11 such that the cooling air is then guided into the vicinity 36 of the electric generator 7. In this embodiment, the cooling effect in improved for the stator 11 as well as for the rotor 10.

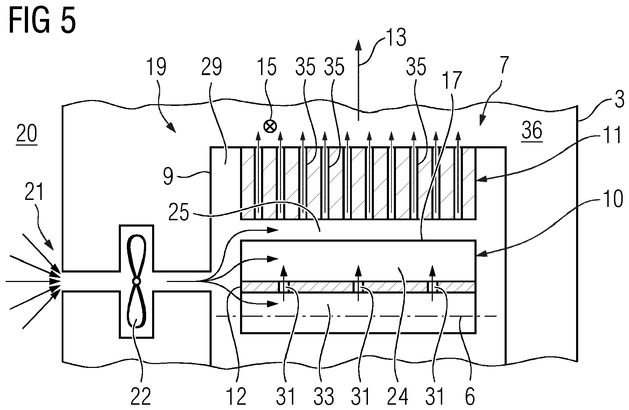

Fig. 5 shows a further option regarding the path of the cooling air. All aspects which have been described with the help of fig. 4 also hold true for the embodiment shown in fig. 4, apart from the following aspects. The embodiment of fig. 5 differs from the embodiment of fig. 4 by the aspect that only one opening inlet 21 is provided, wherein the air inlet chamber 29 leads into the air cooling channels 24, 28 from only one side, wherein the other axial side of each of the air cooling channels 24, 28 is closed. Hence, an asymmetrical cooling arrangement is realized. The cooling air is then guided to the radial air ducts 35 of the stator 11 which lead through the stator 11 into the vicinity 36 of the electric generator 7.

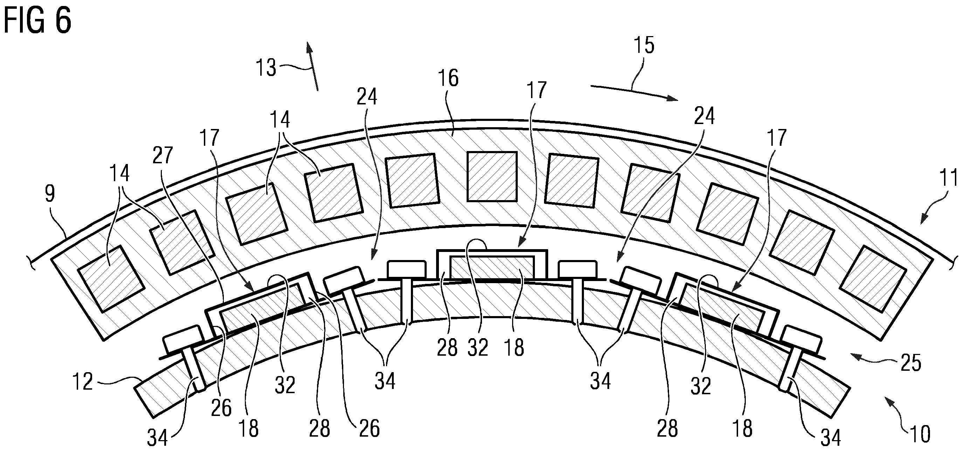

Next, it is referred to fig. 6 which shows the same view as fig. 2 of a rotor 10 according to a possible variation of the invention. All aspects which have been explained with the help of the embodiment shown in figures 2 and 3 basically also hold true for the embodiment shown in fig. 6, except from the aspects which are explained in the following. Each of the modules 17 comprise a permanent magnet 18 and a magnet cover 32, particularly been made of metal. The magnet covers 32 are used as a means to attach the permanent magnet 18 to the shaft 12, wherein bolts 34 which run through lateral flanges of the magnet covers 32 and the shaft 12 are provided for this purpose.

In this embodiment air cooling channels 24 which are similar to the air cooling channels 24 of the first embodiment are provided. Hence, the air cooling channels 24 of the embodiment shown in fig. 6 are laterally delimited by the modules 17 or the magnet covers 32, respectively and radially inwards by the shaft 12. Radially outwards the air cooling channels 24 are open and communicate with the air gap 25.

As can be seen from fig. 6, there remain gaps between the permanent magnet 18 and the respective magnet cover 32. Hence, regarding the longitudinal direction, each module 17 realizes the further air cooling channel 28 which is delimited laterally by the vertical legs 26 and radially outwards by the horizontal bar 27. In this embodiment, the permanent magnets 18 are directly arranged within the further air cooling channel 28.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Electric generator for a wind turbine (1), comprising an outer stator (11) and an inner rotor (10) with a plurality of permanent magnets (18), wherein the rotor (10) is rotatably mounted around a rotation axis (6), **characterized in that** the rotor (10) is realized by a modular assembly of several modules (17) each comprising at least one of the permanent magnets (18), wherein at least one of the modules (17) delimits at least one air cooling channel (24) of the rotor (10).

2. Electric generator according to claim 1, **characterized in that** the air cooling channel (24) extends between two adjacent modules (17).

3. Electric generator according to claim 1 or 2, **characterized in that** an air gap (25) is provided between the stator (11) and the rotor (10), wherein the air cooling channel (24) is open radially outwards to the air gap (25).

4. Electric generator according to one of the preceding claims, **characterized in that** the modules (17) are arranged on a shaft (12), particularly being made of steel.

5. Electric generator according to claim 4, **characterized in that** the shaft (12) has a hollow cross section, wherein the shaft (12) comprises at least one air duct (31) connecting an interior (33) of the shaft (12) with the air cooling channel (24) .

6. Electric generator according to one of the preceding claims, **characterized in that** the air cooling channel (24) extends along the rotation axis (6).

7. Electric generator according to claim 6, **characterized in that** each of the modules (17) comprise an elongated structure, wherein the longitudinal direction of each of the modules (17) is arranged along the rotation axis (6), wherein the modules (17) are arranged adjacently to each other and along a circumferential direction (15) of the electric generator (7) .

8. Electric generator according to claim 7, **characterized in that**, regarding the longitudinal direction, each module (17) comprises a U-shaped cross section having two vertical legs (26) and a horizontal bar (27), wherein the or a further air cooling channel (28) is delimited laterally by the vertical legs (26) and radially outwards by the horizontal bar (27).

9. Electric generator according to claim 7, **characterized in that**, regarding the longitudinal direction, each module (17) comprises a magnet cover (32) with a U-shaped cross section having two vertical legs (26) and a horizontal bar (27), wherein the or a further air cooling channel (28) is delimited laterally by the vertical legs (26) and radially outwards by the horizontal bar (27), wherein the permanent magnet (18) is held in position by the magnet cover (32).

10. Electric generator according to one of the preceding claims, **characterized in that** each of the modules (17) comprises laminated metal sheets having a recess, wherein the respective permanent magnet (18) is arranged in the recess.

11. Electric generator according to one of the preceding claims, **characterized in that** the air cooling channel (24), particularly extending along the complete longitudinal extension of the rotor (10), is open on at least one of the lateral ends of the rotor (10).

12. Electric generator according to claim 11, **characterized in that**
- an air feeding chamber (29) is provided longitudinally on a face end of the rotor (10), wherein the air feeding chamber (29) communicates with the air cooling channel (24), wherein an air discharging chamber (30) is provided longitudinally on the face end of the rotor (10), particularly on the face end of the rotor (10) being arranged oppositely with respect to the air feeding chamber (29), wherein the air cooling channel (24) communicates with the air discharging chamber (30), or
- an air feeding chamber (29) is provided longitudinally on at least one of the face ends of the rotor (10), wherein the air feeding chambers (29) communicates with the air cooling channel (24), wherein at least one radial air duct (35) of the stator (11) is provided which radially leads through the stator (11) and which communicates with the air cooling channel (24) on its one end and with a vicinity (36) of the electric generator (7) on its other end.

13. Inner rotor for an electric generator (7) for a wind turbine (1), comprising a plurality of permanent magnets (18), **characterized in that** the rotor (10) comprises a modular assembly of several modules (17) each comprising at least one of the permanent magnets (18), wherein at least one of the modules (17) delimits at least one air cooling channel (24).

14. Wind turbine, comprising an electric generator (7) according to one of the claims 1 to 12.

15. Wind turbine according to claim 14, **characterized by** an air cooling system (19) being a cooling circuit or an open system and comprising at least one air pump (22), wherein the air pump (22) is adapted to pump cooling air to the air cooling channel (24).
